# EUROPEAN PATENT APPLICATION

(11) **EP 4 169 876 A1**
(43) Date of publication of application: **26.04.2023**
(21) Application number: 20941227.9
(22) Date of filing: 17.12.2020
(51) Int. Cl.: C01B 6/04

(54) **MAGNESIUM HYDRIDE PRODUCTION DEVICE AND MAGNESIUM HYDRIDE PRODUCTION METHOD**

(30) Priority: 19.06.2020 JP 2020106343
(71) Applicant: Bio Coke Lab. Co., Ltd., Tokyo 102-0082 (JP); JP Steel Plantech Co., Kouhoku-ku Yokohama-shi Kanagawa 222-0033 (JP)
(72) Inventor: UESUGI, Hiroshi, Tokyo 102-0082 (JP); UESUGI, Kenichi, Tokyo 102-0082 (JP)
(74) Representative: Hoffmann Eitle
(86) International application number: PCT/JP2020/047180
(87) International publication number: WO 2021/255962

(57) **Abstract**

A magnesium hydride production apparatus and the like suitable for mass production of magnesium hydride is provided.

A magnesium hydride production apparatus (10) includes: a tubular production furnace (20), in which magnesium hydride is produced by causing magnesium and hydrogen to react with each other; a first chamber (21) connected to a first end of the production furnace (20), in which chamber the magnesium to be charged into the production furnace (20) is heated; and a second chamber (22) connected to a second end of the production furnace (20), in which chamber the magnesium hydride produced in the production furnace (20) is cooled.

## Description

### [Technical Field]

The present invention relates to a magnesium hydride production apparatus and a magnesium hydride production method.

### [Background Art]

A method of producing magnesium hydride tablets by compression-molding magnesium flakes and then causing them to react with hydrogen has been proposed (Patent Document 1). A method of producing magnesium hydride powder by reducing magnesium oxide powder with the use of thermal plasma of inert gas and then causing it to react with hydrogen has been proposed (Patent Document 2).

The magnesium hydride produced in this way is used as, for example, fuel for fuel cells. Demand for magnesium hydride is expected to increase as demand for fuel cells grows.

### [Prior Art Document]

### [Patent Documents]

[Patent Document 1] International Publication No. 2010/100684 (WO 2010/100684 A1)
[Patent Document 2] Japanese Patent Application Laid-Open No. 2011-32131 (JP 2011-32131 A)

### [Summary of the Invention]

### [Problems to be Solved by Invention]

However, it is difficult to mass-produce magnesium hydride using the methods disclosed in Patent Document 1 and Patent Document 2.

In one aspect, an object is to provide a magnesium hydride production apparatus and the like suitable for mass production of magnesium hydride.

### [Means for Solving Problems]

A magnesium hydride production apparatus includes: a tubular production furnace, in which magnesium hydride is produced by causing magnesium and hydrogen to react with each other; a first chamber connected to a first end of the production furnace, in which chamber the magnesium to be charged into the production furnace is heated; and a second chamber connected to a second end of the production furnace, in which chamber the magnesium hydride produced in the production furnace is cooled.

### [Effects of Invention]

In one aspect, it is possible to provide a magnesium hydride production apparatus and the like suitable for mass production of magnesium hydride.

### [Brief Description of Drawings]

FIG. 1 is an explanatory diagram for explaining a configuration of a magnesium hydride production apparatus.
FIG. 2 is an explanatory diagram for explaining a configuration of a subunit that receives magnesium compacts.
FIG. 3 is a cross-sectional view of a production furnace near a first end.
FIG. 4 is a cross-sectional view of the production furnace near a second end.
FIG. 5 is a cross-sectional view of the production furnace taken along the line V-V in FIG. 3.
FIG. 6 is an explanatory diagram for explaining a configuration of a controller of the magnesium hydride production apparatus.
FIG. 7 is an explanatory diagram for explaining operation of a conveying device.
FIG. 8 is an explanatory diagram for explaining the operation of the conveying device.
FIG. 9 is an explanatory diagram for explaining the operation of the conveying device.
FIG. 10 is an explanatory diagram for explaining the operation of the conveying device.
FIG. 11 is an explanatory diagram for explaining the operation of the conveying device.
FIG. 12 is an explanatory diagram for explaining the operation of the conveying device.
FIG. 13 is a graph showing temperature variation of a unit.
FIG. 14 is a graph showing variation of power consumption by the magnesium hydride production apparatus.
FIG. 15 is a flowchart for explaining a process flow of a program.
FIG. 16 is an explanatory diagram for explaining a configuration of a magnesium hydride production apparatus of Embodiment 2.
FIG. 17 is an explanatory diagram for explaining operation of a conveying device of Embodiment 2.
FIG. 18 is an explanatory diagram for explaining the operation of the conveying device of Embodiment 2.
FIG. 19 is an explanatory diagram for explaining the operation of the conveying device of Embodiment 2.
FIG. 20 is an explanatory diagram for explaining the operation of the conveying device of Embodiment 2.
FIG. 21 is an explanatory diagram for explaining the operation of the conveying device of Embodiment 2.
FIG. 22 is an explanatory diagram for explaining the operation of the conveying device of Embodiment 2.
FIG. 23 is an explanatory diagram for explaining the operation of the conveying device of Embodiment 2.
FIG. 24 is an explanatory diagram for explaining the operation of the conveying device of Embodiment 2.

### [Mode for Carrying out Invention]

### (Embodiment 1)

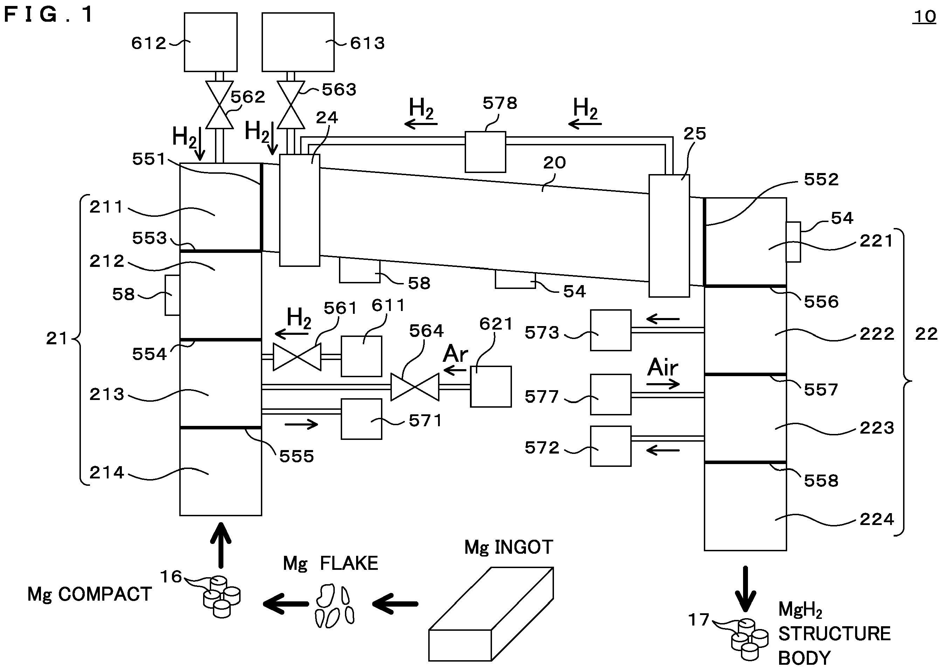

FIG. 1 is an explanatory diagram for explaining a configuration of a magnesium hydride production apparatus 10. The magnesium hydride production apparatus 10 includes a tubular production furnace 20, a first chamber 21 connected to a first end of the production furnace 20, and a second chamber 22 connected to a second end of the production furnace 20.

The production furnace 20 is placed in an inclined state so that the first end side is higher than the second end side. A hydrogen supply cylinder 24 is attached to a periphery of the first end side of the production furnace 20. A hydrogen discharge cylinder 25 is attached to a periphery of the second end side of the production furnace 20. As described later, between the periphery of the production furnace 20 and the hydrogen supply cylinder 24, and between the periphery of the production furnace 20 and the hydrogen discharge cylinder 25, channels are formed, through which hydrogen flows.

The hydrogen discharge cylinder 25 and the hydrogen supply cylinder 24 are connected to each other with a hydrogen pump 578 interposed therebetween. Furthermore, a third hydrogen tank 613 is connected to the hydrogen supply cylinder 24 with a third valve 563 interposed therebetween. A heater 58 and a cooler 54 are mounted on the production furnace 20.

The first chamber 21 includes, in order from the side closer to the production furnace 20, a pressure boosting chamber 211, a heating chamber 212, a first replacement chamber 213, and a receiving chamber 214. A first gastight door 551 is provided between the production furnace 20 and the pressure boosting chamber 211. A third gastight door 553 is provided between the pressure boosting chamber 211 and the heating chamber 212. A fourth gastight door 554 is provided between the heating chamber 212 and the first replacement chamber 213. A fifth gastight door 555 is provided between the first replacement chamber 213 and the receiving chamber 214.

A first hydrogen tank 611 and an argon gas tank 621 are connected to the first replacement chamber 213 with a first valve 561 and an argon valve 564 interposed therebetween, respectively. Furthermore, a first suction pump 571 is connected to the first replacement chamber 213.

The first valve 561 may be connected to a hydrogen release pipe or a hydrogen feeding device for feeding pressurized hydrogen, and function as a hydrogen releasing valve. Instead of using the first hydrogen tank 611, the hydrogen recovered from the production furnace 20 may be purified and then be delivered through the first valve 561.

A heater 58 is mounted on the heating chamber 212. A second hydrogen tank 612 is connected to the pressure boosting chamber 211 with a second valve 562 interposed therebetween.

The second chamber 22 includes, in order from the side closer to the production furnace 20, a cooling chamber 221, a decompression chamber 222, a second replacement chamber 223, and a delivery chamber 224. A second gastight door 552 is provided between the production furnace 20 and the cooling chamber 221. A sixth gastight door 556 is provided between the cooling chamber 221 and the decompression chamber 222. A seventh gastight door 557 is provided between the decompression chamber 222 and the second replacement chamber 223. An eighth gastight door 558 is provided between the second replacement chamber 223 and the delivery chamber 224.

A cooler 54 is mounted on the cooling chamber 221. A third suction pump 573 is connected to the decompression chamber 222. An air pump 577 and a second suction pump 572 are connected to the second replacement chamber 223.

While one of the first gastight door 551 and the third gastight door 553 provided for the pressure boosting chamber 211 is open, the other is closed, that is, these doors are not opened at the same time. While one of the third gastight door 553 and the fourth gastight door 554 provided for the heating chamber 212 is open, the other is closed, that is, these doors are not opened at the same time. While one of the fourth gastight door 554 and the fifth gastight door 555 provided for the first replacement chamber 213 is open, the other is closed, that is, these doors are not opened at the same time.

While one of the second gastight door 552 and the sixth gastight door 556 provided for the cooling chamber 221 is open, the other is closed, that is, these doors are not opened at the same time. While one of the sixth gastight door 556 and the seventh gastight door 557 provided for the decompression chamber 222 is open, the other is closed, that is, these doors are not opened at the same time. While one of the seventh gastight door 557 and the eighth gastight door 558 provided for the second replacement chamber 223 is open, the other is closed, that is, these doors are not opened at the same time.

The pressure boosting chamber 211, the heating chamber 212, the first replacement chamber 213, and the receiving chamber 214, which are included in the first chamber 21, are arranged substantially horizontally. For example, an elevator may be installed at the entrance of the receiving chamber 214. Similarly, the cooling chamber 221, the decompression chamber 222, the second replacement chamber 223, and the delivery chamber 224, which are included in the second chamber 22, are arranged substantially horizontally.

That is, in FIG. 1, the part illustrating the production furnace 20 is a side view of the magnesium hydride production apparatus 10, while the remaining part is a plan view of the magnesium hydride production apparatus 10.

With the above configuration, the temperature and pressure in the production furnace 20 are stabilized and the inside of the production furnace 20 is prevented from being contaminated by oxygen, foreign matter, etc. This makes it possible to operate the magnesium hydride production apparatus 10 stably for a long period of time.

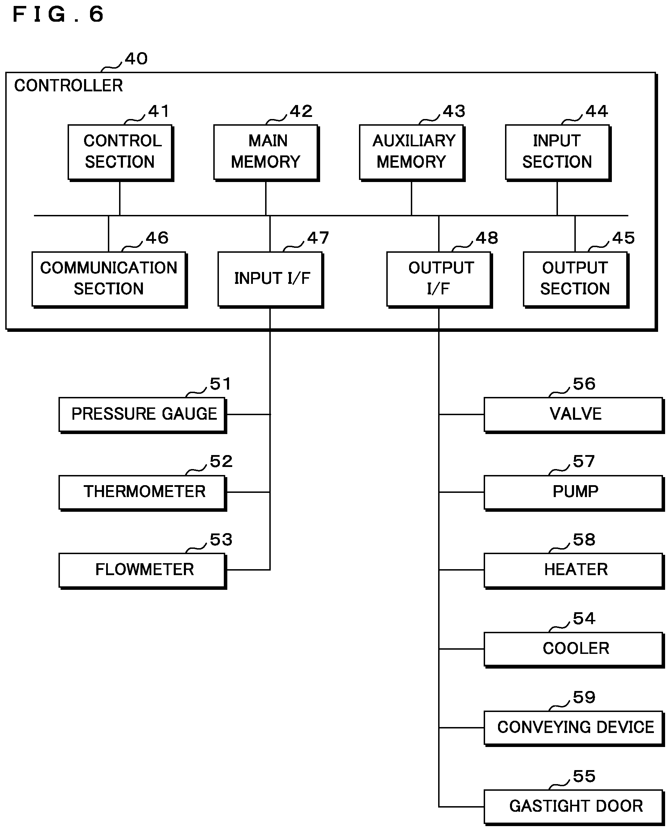

Pressure gauges 51 (see FIG. 6), thermometers 52 (see FIG. 6), and flowmeters 53 (see FIG. 6) are installed at various parts of the magnesium hydride production apparatus 10.

A magnesium hydride production process will be outlined below. The magnesium used in this embodiment is magnesium compacts 16, which are made by shaving off flakes from magnesium ingots and compression-molding them into a predetermined shape. The magnesium compacts 16 have a porous structure, so that the actual surface area thereof is large.

The magnesium compacts 16 are transported in a hermetically-sealed container with dry air therein, and charged into the receiving chamber 214. When the magnesium compacts 16 are charged, the receiving chamber 214 is opened to the atmosphere. In other words, in the receiving chamber 214, the magnesium compacts 16 are in an air atmosphere condition.

A manufacturing plant for producing the magnesium compacts 16 may be connected to the receiving chamber 214. The manufactured magnesium compacts 16 can be charged directly into the receiving chamber 214.

The magnesium compacts 16 are transferred from the receiving chamber 214 to the first replacement chamber 213. In the first replacement chamber, the atmosphere around the magnesium compacts 16 is changed to an inert-gas atmosphere and then to a hydrogen-gas atmosphere. The following explanation will be made of a case where argon is used as the inert gas by way of example.

Specifically, the first suction pump 571 operates to reduce the pressure in the first replacement chamber 213. The argon valve 564 operates to fill the first replacement chamber 213 with argon. Repeating the operation of the first suction pump 571 and the argon valve 564 several times changes the atmosphere in the first replacement chamber 213 to an argon atmosphere.

The first suction pump 571 then operates to reduce the pressure in the first replacement chamber 213. The first valve 561 operates to fill the first replacement chamber 213 with hydrogen. Repeating the operation of the first suction pump 571 and the first valve 561 several times changes the atmosphere in the first replacement chamber 213 to a hydrogen atmosphere.

The magnesium compacts 16 are transferred from the first replacement chamber 213 to the heating chamber 212. The magnesium compacts 16 are heated in the heating chamber 212. The magnesium compacts 16 are transferred from the heating chamber 212 to the pressure boosting chamber 211. The pressure of hydrogen around the magnesium compacts 16 is increased in the pressure boosting chamber 211. The environment around the magnesium compacts 16 is thus equalized to the environment inside the production furnace 20.

The magnesium compacts 16 are transferred from the pressure boosting chamber 211 to the production furnace 20. The magnesium compacts move from the first end to the second end of the production furnace 20 during a predetermined reaction time. In the production furnace 20, magnesium and hydrogen combine according to the chemical reaction shown in Equation (1), which causes the magnesium compacts to change to magnesium hydride-structure bodies 17.

Mg + H2 -> MgH2 ...... (1)

As mentioned above, the magnesium compacts 16 have a porous structure, which allows hydrogen to quickly penetrate into the interior, resulting in the reaction shown in Equation (1). The dimensions and compression ratio of the magnesium compacts 16 are selected so that the reaction shown in Equation (1) is completed throughout the magnesium compacts 16 within the predetermined reaction time.

The magnesium hydride-structure bodies 17 have a porous structure similar to that of the magnesium compacts 16. The magnesium hydride-structure bodies 17 are transferred to the decompression chamber 222 via the cooling chamber 221, and placed under room-temperature and atmospheric-pressure conditions. The magnesium hydride-structure bodies 17 are then transferred from the decompression chamber 222 to the second replacement chamber 223. The hydrogen in the second replacement chamber 223 is replaced by air. The magnesium hydride-structure bodies 17 are transferred to the delivery chamber 224. The magnesium hydride-structure bodies 17 are then taken out of the delivery chamber 224.

In the second replacement chamber 223, hydrogen may first be replaced by an inert gas such as argon, and then the argon may be replaced by air. In such a case, an inert gas production device or a tank for supplying the inert gas is connected to the second replacement chamber 223.

Magnesium hydride is a stable compound and can be transported and stored in the air atmosphere. If long-term storage is required, for example, the hydrogen in the second replacement chamber 223 may be replaced by an inert gas such as argon, and the magnesium hydride-structure bodies 17 may be stored in a container together with the inert gas for transportation and storage. By storing the magnesium hydride-structure bodies 17 in an inert-gas atmosphere, it is possible to provide the magnesium hydride-structure bodies 17 that can maintain stable quality even after long-term storage of more than five years or a decade or so.

Such storage in an inert-gas atmosphere is suitable for magnesium hydride-structure bodies 17 that are used for stockpiling supplies for disaster management, for example. If the magnesium hydride-structure bodies 17 are put into a hydrolysis reaction vessel immediately after unsealing and the hydrogen produced is fed into a fuel cell, the magnesium hydride-structure bodies 17 contribute to a rapid power supply Dry air may be used instead of the inert gas. Magnesium hydride-structure bodies 17 for long-term storage can be provided at a lower cost than when inert gas is used.

It is preferable that the parts that come into contact with hot, high-pressure hydrogen, such as the inner surface of the production furnace 20, the inner surface of the hydrogen supply cylinder 24, the inner surface of the hydrogen discharge cylinder 25, and the magnesium receiving dishes, be covered with stainless steel, copper, or aluminum, for example. In this way, it is possible to prevent corrosion, embrittlement, etc. due to hydrogen.

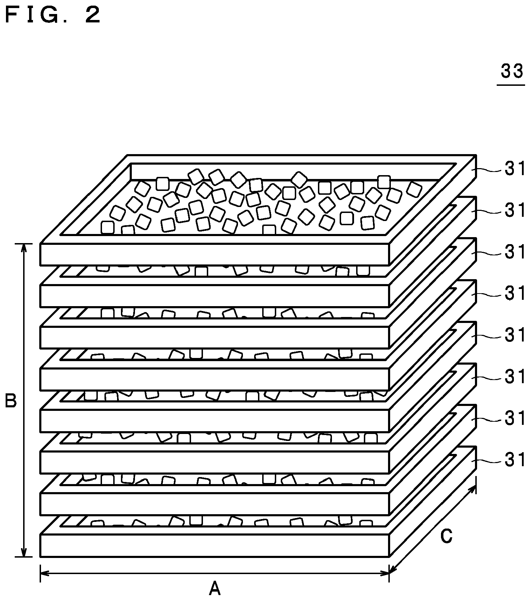

FIG. 2 is an explanatory diagram for explaining a configuration of a subunit 33 that receives the magnesium compacts 16. The subunit 33 includes a plurality of magnesium receiving dishes 31 stacked with spaces therebetween. The magnesium receiving dishes 31 are flat dishes each having a bottom and sides surrounding the bottom. Chemical reaction proceeds quickly in the production furnace 20 because the magnesium compacts 16 easily come into contact with hydrogen.

The magnesium receiving dish 31 may have a number of small holes, slits, or the like, through which the magnesium compacts 16 cannot pass. The magnesium compacts 16 more easily come into contact with hydrogen, so that the reaction shown in Equation (1) proceeds efficiently.

The subunit 33 is, for example, a rack with a plurality of shelves, in which the magnesium receiving dishes 31 are housed. The subunit 33 may be made of magnesium receiving dishes 31 stacked with spacers interposed therebetween. The spacers and the magnesium receiving dish 31 may be formed in one body.

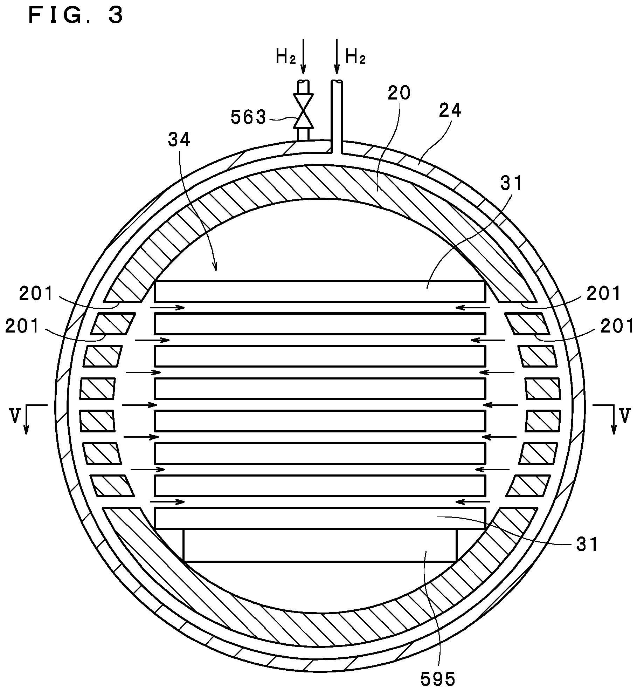

In the magnesium hydride production apparatus 10 of this embodiment, a unit 34, in which six subunits 33 are connected in the depth direction of FIG. 2 (see FIG. 3), is used as one processing unit. The subunits 33 included in the unit 34 may be mechanically connected or simply transferred simultaneously without being mechanically connected.

The magnesium compacts 16 are received in the magnesium receiving dishes 31. Reception of the magnesium compacts 16 is carried out in the receiving chamber 214. A subunit 33 or a unit 34 that has already received the magnesium compacts 16 may be supplied into the receiving chamber 214.

FIG. 3 is a cross-sectional view of the production furnace 20 near the first end. As explained using FIG. 1, "the first end of the production furnace 20" means one of both ends of the production furnace 20, at which end the production furnace 20 is connected to the first chamber 21. FIG. 3 shows a cross section of the production furnace 20 at the position of the pipe connecting the hydrogen pump 578 to the hydrogen supply cylinder 24.

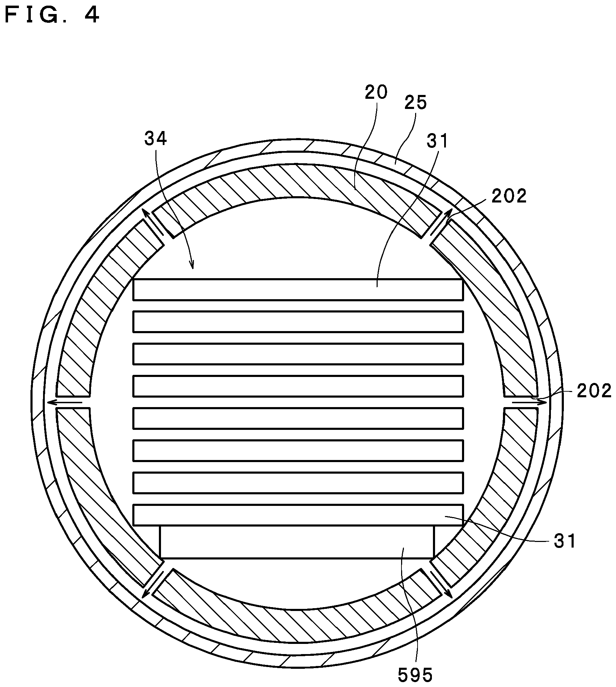

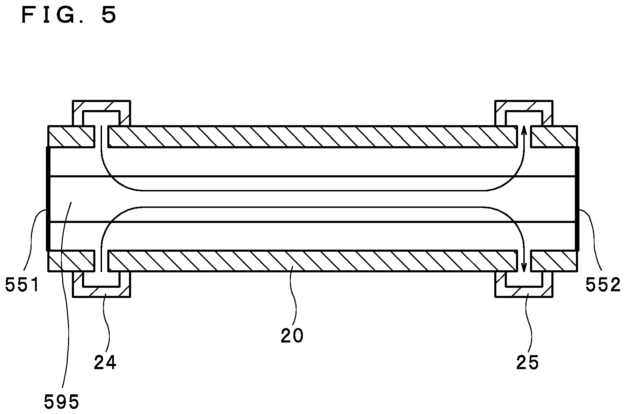

FIG. 4 is a cross-sectional view of the production furnace 20 near the second end. As explained using FIG. 1, "the second end of the production furnace 20" means one of both ends of the production furnace 20, at which end the production furnace 20 is connected to the second chamber 22. FIG. 4 shows a cross section of the production furnace 20 at the center of the hydrogen discharge cylinder 25. FIG. 5 is a cross-sectional view of the production furnace 20 taken along the line V-V in FIG. 3.

The production furnace 20 is cylindrical and provided with the first gastight door 551 and the second gastight door 552 at the first end and the second end, respectively. The hydrogen supply cylinder 24 is disposed around the periphery of the production furnace 20 on the first end side. Walls are provided between the periphery of the production furnace 20 and both ends of the hydrogen supply cylinder 24, so that a channel for hydrogen is formed around the periphery of the production furnace 20.

Similarly, the hydrogen discharge cylinder 25 is disposed around the periphery of the production furnace 20 on the second end side. Walls are provided between the periphery of the production furnace 20 and both ends of the hydrogen discharge cylinder 25, so that a channel for hydrogen is formed around the periphery of the production furnace 20.

A movement path 595 is provided in a lower portion of the production furnace 20. A plurality of units 34 are mounted in a row on the movement path 595. Wheels, rollers, or sliding surfaces, for example, are provided on the underside of the units 34 to be placed on the movement path 595 or on the upper side of the movement path 595, so that the units 34 can smoothly move on the movement path 595 in the direction from left to right in FIG. 1.

The movement path 595 may be a belt conveyor. When a belt conveyor is used for the movement path 595, the production furnace 20 may be placed horizontally. The production furnace 20 may be of any shape, such as a square or elliptical cylinder shape.

As shown in FIG. 3, a plurality of feeding openings 201 are formed in the side wall of the production furnace 20 inside the hydrogen supply cylinder 24. The positions of the feeding openings 201 correspond to the positions of the spaces between the magnesium receiving dishes 31. As shown in FIG. 4, a plurality of discharge openings 202 are formed in the side wall of the production furnace 20 inside the hydrogen discharge cylinder 25. The discharge openings 202 are spaced almost evenly.

Hydrogen is supplied to the inside of the hydrogen supply cylinder 24 through the piping connecting the hydrogen pump 578 to the hydrogen supply cylinder 24 and the piping connecting the third hydrogen tank 613 to the hydrogen supply cylinder 24. Hydrogen is fed toward the spaces between the magnesium receiving dishes 31 via the feeding openings 201.

As shown by the arrows in FIG. 5, hydrogen flows from the first end side toward the second end side in the production furnace 20. While flowing, the hydrogen reacts with magnesium to produce magnesium hydride. The hydrogen that has not reacted is sucked into the hydrogen pump 578 via the discharge openings 202 and is returned to the hydrogen supply cylinder 24 for circulation. Hydrogen, the amount of which corresponds to that of the hydrogen consumed in producing the magnesium hydride, is replenished from the third hydrogen tank 613.

Table 1 lists approximate dimensions of the magnesium hydride production apparatus 10 of this embodiment. As shown in FIG. 2, dimension A of the subunit 33 is the width of the subunit 33, dimension B is the height of the subunit 33, and dimension C is the depth of the subunit 33. As mentioned above, the subunits 33 are connected in the depth direction to form the unit 34.

**[Table 1]**

| Part | | No. 1 | No. 2 |
|---|---|---|---|
| Dimensions of subunit | A | 2.8m | 3.1m |
| | B | 2.8m | 3.1m |
| | C | 1m | 1m |
| Amount of magnesium to be loaded in one subunit | | 6.13t | 7.37t |
| Amount of magnesium hydride to be produced in one subunit | | 6.59t | 7.93t |
| Number of subunits included in one unit | | 6 | 6 |
| Length of unit | | 6m | 6m |
| Inner diameter of production furnace | | 4m | 4.4m |
| Length of production furnace | | 30m | 60m |
| Number of units in production furnace | | 5 | 10 |
| Production furnace passage time | | 48 hours | 48 hours |
| Annual production | | 4,600t | 11,200t |

The apparatuses of No. 1 and No. 2 operate continuously 24 hours a day to produce the magnesium hydride-structure bodies 17, except 28 days for maintenance per year. In the production furnace 20 in operation, five units 34 and ten units 34 are arranged in a row in the cases of No. 1 and No. 2, respectively.

Dimensions of the magnesium compacts 16 and the depth of the magnesium receiving dish 31 are set so that the reaction shown in Equation (1) is completed to the center within the production furnace passage time. By stacking a number of shallow magnesium receiving dishes 31 with spaces therebetween, the magnesium compacts 16 more easily come into contact with hydrogen. This makes it easier for the reaction shown in Equation (1) to proceed.

The dimensions shown in Table 1 are all examples and the present invention is not limited to these dimensions. Appropriate dimensions are selected according to the required production volume and installation area.

FIG. 6 is an explanatory diagram for explaining a configuration of a controller of the magnesium hydride production apparatus 10. A controller 40 includes a control section 41, a main memory 42, an auxiliary memory 43, an input section 44, an output section 45, a communication section 46, an input I/F (Interface) 47, an output I/F 48, and a bus. As the controller 40 of this embodiment, a device dedicated to the magnesium hydride production apparatus 10 may be used, or alternatively, a general-purpose personal computer or the like may be used.

The control section 41 is an arithmetic control device that executes a program of the present embodiment. The control section 41 employs one or more central processing units (CPUs), a multi-core CPU or the like. The control section 41 is connected to the hardware components of the controller 40 via the bus.

The main memory 42 is a storage device, such as an SRAM (Static Random Access Memory), a DRAM (Dynamic Random Access Memory), or a flash memory. The main memory 42 temporarily stores information required in the process performed by the control section 41 and the program being executed by the control section 41.

The auxiliary memory 43 is a storage device, such as an SRAM, a flash memory, a hard disk, or a magnetic tape device. The auxiliary memory 43 stores a program to be executed by the control section 41 and various information necessary for the execution of the program.

The input section 44 is, for example, a keyboard, a touch panel, and/or a mouse. The output section 45 is, for example, a liquid crystal display or an organic EL display. The output section 45 may further include, for example, warning lights or speakers. The communication section 46 is an interface for communication with a network.

The input I/F 47 is an interface, through which the control section 41 obtains data from various sensors, such as the pressure gauges 51, the thermometers 52, and the flowmeters 53, which are installed at various locations of the magnesium hydride production apparatus 10.

The output I/F 48 is an interface, through which the control section 41 sends out control signals to the valves 56, the pumps 57, the heaters 58, the coolers 54, a conveying device 59, the gastight doors 55, etc., which are installed at various locations of the magnesium hydride production apparatus 10. Note that drive circuits, not shown in the drawings, are provided between the output I/F 48 and the valves 56, the pumps 57, the heaters 58, the coolers 54, the conveying device 59, and the gastight doors 55.

The valves 56 include the first valve 561, the second valve 562, the third valve 563, and the argon valve 564. The pumps 57 include the first suction pump 571, the second suction pump 572, the third suction pump 573, the air pump 577, and the hydrogen pump 578.

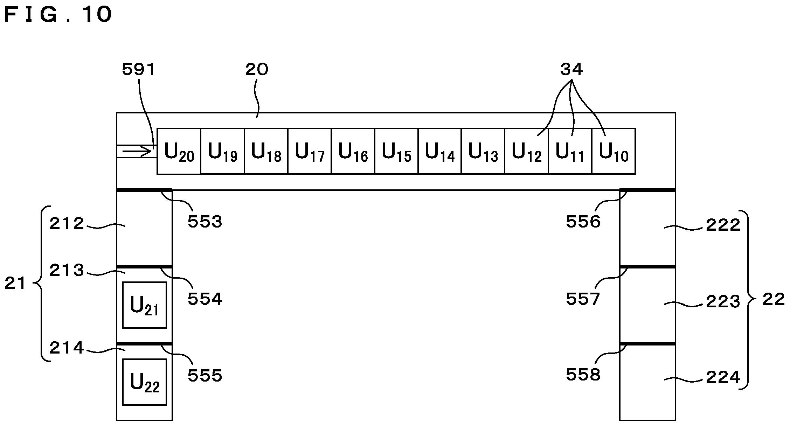

The conveying device 59 includes a first actuator 591 (see FIG. 10) and a second actuator 592, which are described later, as well as the movement path 595. The gastight doors 55 include the first gastight door 551, the second gastight door 552, the third gastight door 553, the fourth gastight door 554, the fifth gastight door 555, the sixth gastight door 556, the seventh gastight door 557, and the eighth gastight door 558.

Based on the data obtained via the input I/F 47, the control section 41 controls the valves 56, the pumps 57, the heaters 58, and the coolers 54 to maintain the temperature and pressure in the production furnace 20 at predetermined values. The predetermined values are, for example, a hydrogen temperature of about 400 °C and a hydrogen pressure of about 0.9 MPa, or 9 atm. The temperature and pressure in the production furnace 20 may be controlled using a feedback circuit or the like provided separately from the control section 41.

Furthermore, the control section 41 controls the gastight doors 55 and the conveying device 59 to transfer the unit 34 from the receiving chamber 214 to the delivery chamber 224, via the first replacement chamber 213, the heating chamber 212, the pressure boosting chamber 211, the production furnace 20, the cooling chamber 221, the decompression chamber 222, and the second replacement chamber 223.

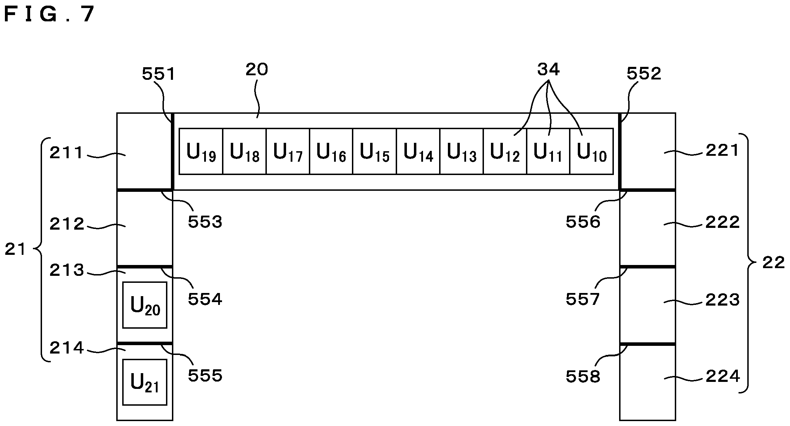

FIGS. 7 to 12 are explanatory diagrams for explaining operation of the conveying device 59. In FIGS. 7 to 12, the production furnace 20, the first chamber 21, the second chamber 22, the gastight doors 55, and the units 34 are illustrated schematically, and the hydrogen tanks 61, the pumps 57, piping etc. are omitted.

The following explanation will be made of a case, where ten units 34 are lined up in one row in the production furnace 20, as shown in No. 2 in Table 1, by way of example. In the case of No. 2, ten units 34 are lined up in one row in the production furnace 20. In FIGS. 7 to 12, the subscripts of U10 to U22 indicate the numbers of the units 34. When the number of a unit 34 needs to be indicated, the reference numeral is followed by the unit number, for example, the "unit 34U10".

FIG. 7 shows a state, in which the reaction shown in Equation (1) is occurring in the production furnace 20. This state is maintained for 9.6 hours in the case of No. 1 in Table 1, and for 4.8 hours in the case of No. 2. The pressure boosting chamber 211, the heating chamber 212, and the second chamber 22 are empty. The interior of the cooling chamber 221 is maintained at a temperature and pressure close to those of the interior of the production furnace 20.

The receiving chamber 214 is open to the atmosphere. The control section 41 causes the magnesium compacts 16 to be received on the magnesium receiving dishes 31 of the unit 34 in the receiving chamber 214.

The control section 41 transfers the unit 34U20 in the receiving chamber 214 into the first replacement chamber at a predetermined period of time before processing of the unit 34U10 is completed in the production furnace 20. The first replacement chamber 213 is vented to the air atmosphere. The control section 41 changes the atmosphere in the first replacement chamber 213 to an argon atmosphere and then to a hydrogen atmosphere.

Specifically, the control section 41 opens the fifth gastight door 555. The control section 41 operates the conveying device 59 to transfer the unit 34U20 from the receiving chamber 214 to the first replacement chamber 213. The control section 41 closes the fifth gastight door 555.

The control section 41 operates the first suction pump 571 to reduce the pressure in the first replacement chamber 213. The control section 41 operates the argon valve 564 to fill the first replacement chamber 213 with argon. The control section 41 repeats operation of the first suction pump 571 and the argon valve 564 several times to change the atmosphere in the first replacement chamber 213 to an argon atmosphere.

The control section 41 operates the first suction pump 571 to reduce the pressure in the first replacement chamber 213. The control section 41 operates the first valve 561 to fill the first replacement chamber 213 with hydrogen. The control section 41 repeats operation of the first suction pump 571 and the first valve 561 several times to change the atmosphere in the first replacement chamber 213 to a hydrogen atmosphere. By means of the fourth gastight door 554 and the fifth gastight door 555, the hydrogen atmosphere in the first replacement chamber 213 is maintained.

After the changing to the hydrogen atmosphere is completed, the control section 41 operates the fourth gastight door 554 and the conveying device 59 to transfer the unit 34U20 from the first replacement chamber 213 to the heating chamber 212. The control section 41 closes the fourth gastight door 554. The control section 41 operates the heater 58 to heat the interior of the heating chamber 212 to a temperature close to that of the interior of the production furnace 20.

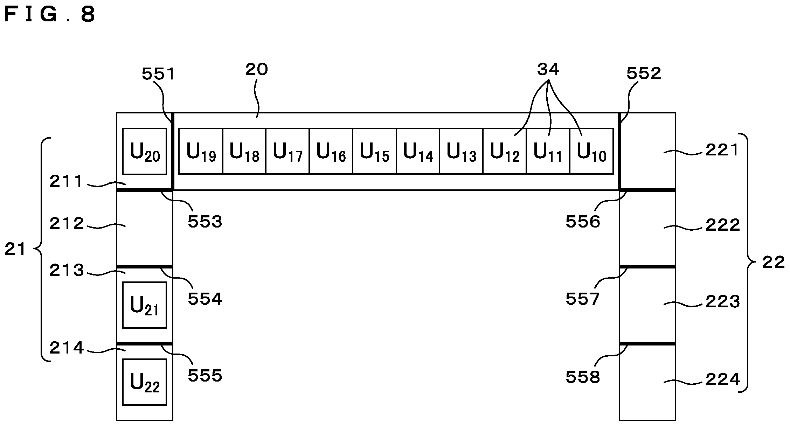

After the heating is completed, the control section 41 opens the third gastight door 553 and operates the conveying device 59 to transfer the unit 34U20 to the pressure boosting chamber 211, as shown in FIG. 8. The control section 41 closes the third gastight door 553. The control section 41 operates the second valve 562 to feed hydrogen from the second hydrogen tank 612 into the pressure boosting chamber 211 so that the pressure in the pressure boosting chamber 211 is increased to a pressure close to that of the interior of the production furnace 20. In this way, the interior of the pressure boosting chamber 211 is set to a temperature and pressure close to those of the interior of the production furnace 20.

A heater, which is not shown, is disposed between the second hydrogen tank 612 and the pressure boosting chamber 211, so that hydrogen heated to a temperature close to that of the inside of the production furnace 20 is supplied to the pressure boosting chamber 211. A heater may be provided for the pressure boosting chamber 211.

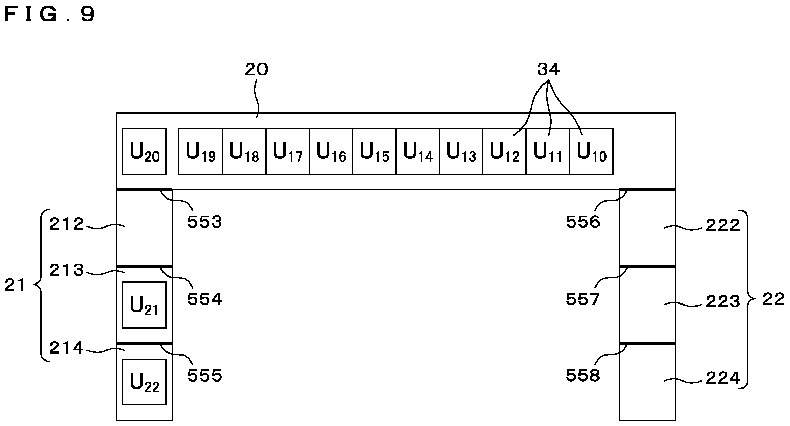

As shown in FIG. 9, the control section 41 opens the first gastight door 551 and the second gastight door 552 to bring the production furnace 20, the pressure boosting chamber 211, and the cooling chamber 221 to one continuous space. When the first gastight door 551 and the second gastight door 552 are opened, the temperature and pressure in the production furnace 20, the pressure boosting chamber 211, and the cooling chamber 221 are equalized.

It is possible to prevent the conditions in the production furnace 20 from changing due to opening the first gastight door 551 and the second gastight door 552 by equalizing the temperature and pressure in the pressure boosting chamber 211 and the cooling chamber 221 to those of the interior of the production furnace 20 before opening the first gastight door 551 and the second gastight door 552 as described above. In this way, variations in the quality of the magnesium hydride-structure bodies 17 can be prevented.

As shown in FIG. 10, the control section 41 operates the first actuator 591, which is a component of the conveying device 59, to push the unit 34U20 into the production furnace 20. As explained using FIG. 3, the units 34 are placed on the movement path 595 in a row in the production furnace 20. As explained using FIG. 1, the production furnace 20 is placed in an inclined state so that the first end side is higher than the second end side. As a result, all the units 34 in the production furnace 20 are pushed by the unit 34U20 and move smoothly toward the cooling chamber 221.

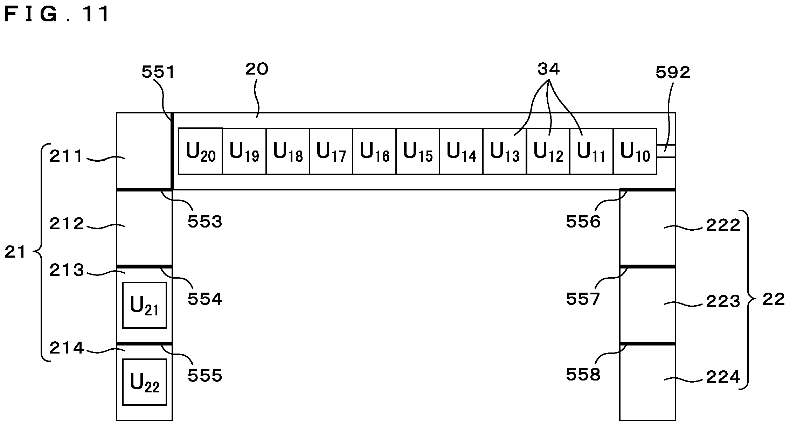

As shown in FIG. 11, the control section 41 closes the first gastight door 551. The control section 41 operates the second actuator 592, which is a component of the conveying device 59, to pull the unit 34U10 into the cooling chamber 221.

Instead of using the second actuator 592, a downward slope may be provided at the entrance to the cooling chamber 221 so that the unit 34U10 automatically slides into the cooling chamber 221 in the state shown in FIG. 10.

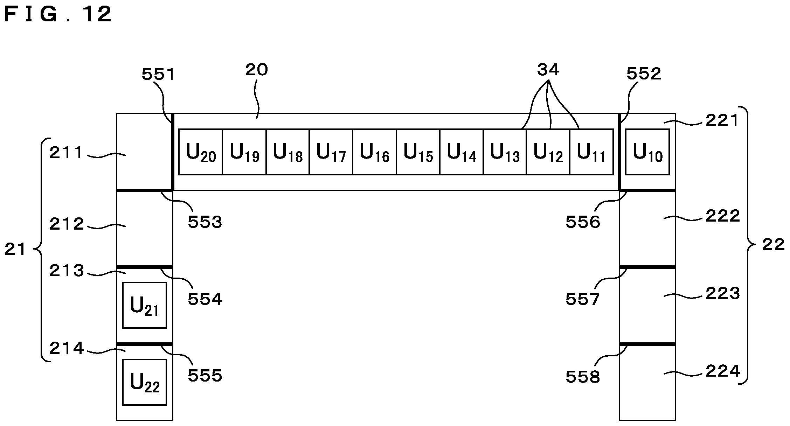

As shown in FIG. 12, the control section 41 closes the second gastight door 552. The control section 41 operates the cooler 54 to cool the unit 34U10. The control section 41 opens the sixth gastight door 556 and operates the conveying device 59 to transfer the unit 34U10 to the decompression chamber 222. The control section 41 closes the sixth gastight door 556.

The control section 41 operates the third suction pump 573 to reduce the pressure in the decompression chamber 222. The control section 41 opens the seventh gastight door 557 and operates the conveying device 59 to transfer the unit 34U10 to the second replacement chamber 223. The control section 41 closes the seventh gastight door 557.

The control section 41 changes the atmosphere in the second replacement chamber 223 from the hydrogen atmosphere to the air atmosphere. Specifically, the control section 41 repeats operating the second suction pump 572 to reduce the pressure in the second replacement chamber 223 and then feeding air into the second replacement chamber 223 via the air pump 577 several times.

The control section 41 opens the eighth gastight door 558 and operates the conveying device 59 to transfer the unit 34U10 to the delivery chamber 224. The control section 41 closes the eighth gastight door 558. The control section 41 discharges the completed magnesium hydride-structure bodies 17 from the delivery chamber 224. The magnesium receiving dishes 31 are transferred to the first chamber 21 side for the next use.

Instead of using the air pump 577, the second replacement chamber 223 may be opened to the outside air via a valve 56. Two or all of the first hydrogen tank 611, the second hydrogen tank 612, and the third hydrogen tank 613 may be provided as a common hydrogen tank 61. Instead of the hydrogen tank 61, a hydrogen production device may be connected.

The inert gas and hydrogen sucked by the first suction pump 571 may be separated and purified for reuse. Hydrogen sucked by the second suction pump 572 may be purified for reuse.

The control section 41 may place a hydrogen storage alloy in the decompression chamber 222 instead of operating the third suction pump 573 to reduce the pressure in the decompression chamber 222. The high-pressure hydrogen in the decompression chamber 222 is absorbed by the hydrogen storage alloy and the pressure in the decompression chamber 222 is reduced. The control section 41 transfers the hydrogen storage alloy having absorbed hydrogen to the first replacement chamber 213 to release the hydrogen in the first replacement chamber 213. In this way, the hydrogen in the magnesium hydride production apparatus 10 can be reused.

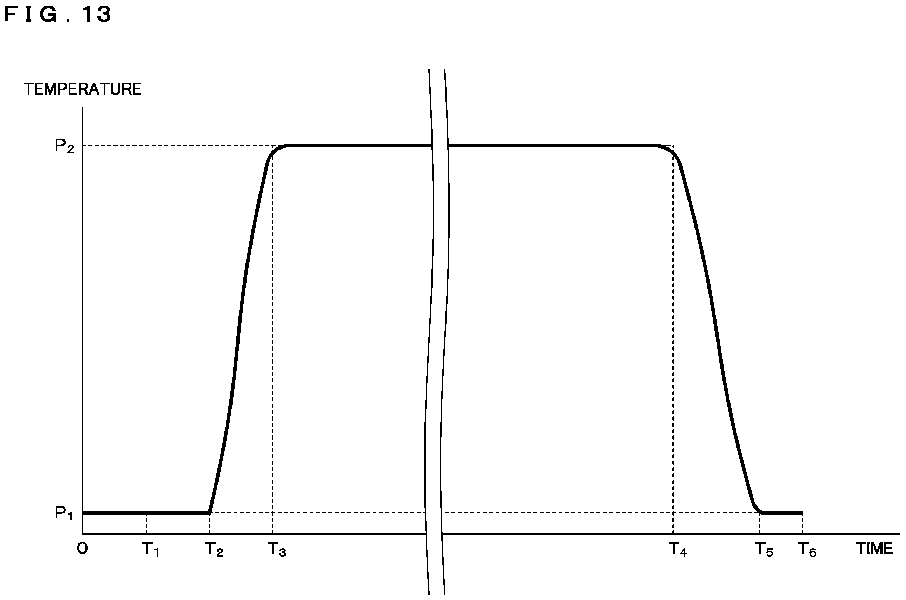

FIG. 13 is a graph showing temperature variation of a unit 34. The abscissa is the time elapsed since the start of the process of receiving the magnesium compacts 16 in the magnesium receiving dishes 31 in the receiving chamber 214. The ordinate is the temperature of the unit 34, and more specifically, internal temperature of the magnesium compacts 16 or the magnesium hydride-structure bodies 17 received in the unit 34.

The receiving process is carried out at temperature P1, which is room temperature. The receiving process is completed by time T1. As explained using FIG. 7, the control section 41 transfers the unit 34 from the receiving chamber 214 to the first replacement chamber 213. At time T1, the control section 41 starts the process of changing the atmosphere in the first replacement chamber 213 from an inert-gas atmosphere to a hydrogen atmosphere. Repeating decompression and hydrogen feeding in the first replacement chamber 213 causes slight temperature fluctuations, but the unit 34 is maintained almost at temperature P1.

The changing to the hydrogen atmosphere is completed by time T2, and the control section 41 transfers the unit 34 from the first replacement chamber 213 to the heating chamber 212. At time T2, the control section 41 operates the heater 58 to start heating the unit 34. The temperature P2, which is the heating completion temperature, is about 400 °C, as described above.

After the heating is completed, as explained using FIG. 8, the control section 41 transfers the unit 34 to the pressure boosting chamber 211 and boosts pressure of hydrogen around the unit 34. The pressure of hydrogen after completion of the pressure boosting is about 0.9 MPa, as described above.

At time T3, as explained using FIG. 9, the control section 41 opens the first gastight door 551 and the second gastight door 552. The control section 41, as explained using FIGS. 10 to 12, inserts the unit 34 into the production furnace 20 and closes the first gastight door 551 and the second gastight door 552. The reaction shown in Equation (1) proceeds in the production furnace 20.

In a similar process, the control section 41 periodically inserts a new unit 34 into the production furnace 20. The units 34 in the production furnace 20 are pushed by the new unit 34 and move toward the second end side. The time interval, at which a new unit 34 is inserted into the production furnace 20, is every 9.6 hours in the case of No. 1 in Table 1, and every 4.8 hours in the case of No. 2.

At time T4, the unit 34 reaches the position of the unit 34U10 in FIG. 9. The time elapsed from time T3 to time T4 is 48 hours in both cases of No. 1 and No. 2, as shown in the row "Production furnace passage time" in Table 1.

The control section 41 inserts a new unit 34 into the production furnace 20 and the pushed-out unit 34 is received in the cooling chamber 221. After the hydrogen around the unit 34 is decompressed to the atmospheric pressure, the control section 41 transfers the unit 34 to the decompression chamber 222 and cools it to the room temperature P1. At time T5, the control section 41 transfers the unit 34 to the second replacement chamber 223 and starts the process of changing the hydrogen atmosphere to an air atmosphere.

At time T6, the control section 41 discharges the completed magnesium hydride-structure bodies 17 from the magnesium hydride production apparatus 10.

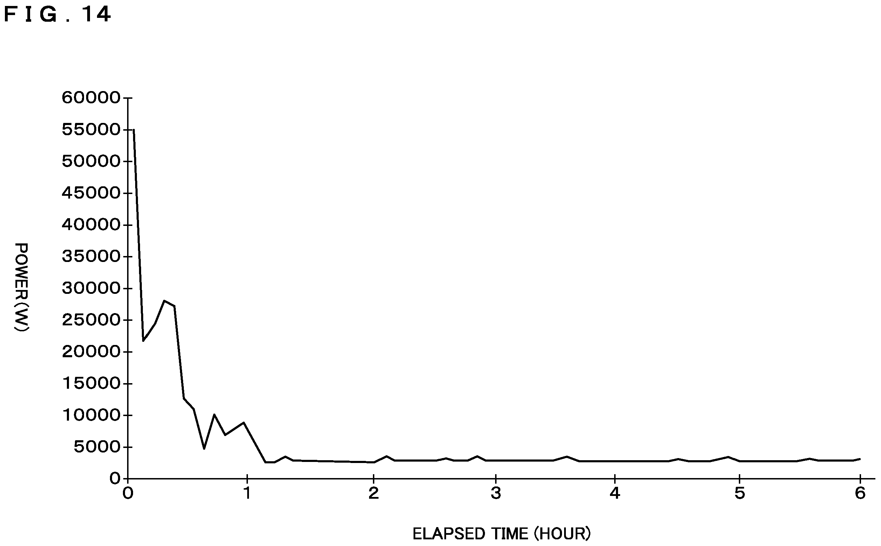

FIG. 14 is a graph showing variation of power consumption by the magnesium hydride production apparatus 10. The abscissa is the time elapsed in hours since the start of the magnesium hydride production apparatus 10. The ordinate is the power consumption by the magnesium hydride production apparatus 10 in watts.

Immediately after the current is switched on, the power consumption shows a large value due to the start-up power of the heaters 58, the pumps 57, etc. After about one hour, the magnesium hydride production apparatus 10 reaches a steady state of operation and the power consumption becomes almost constant.

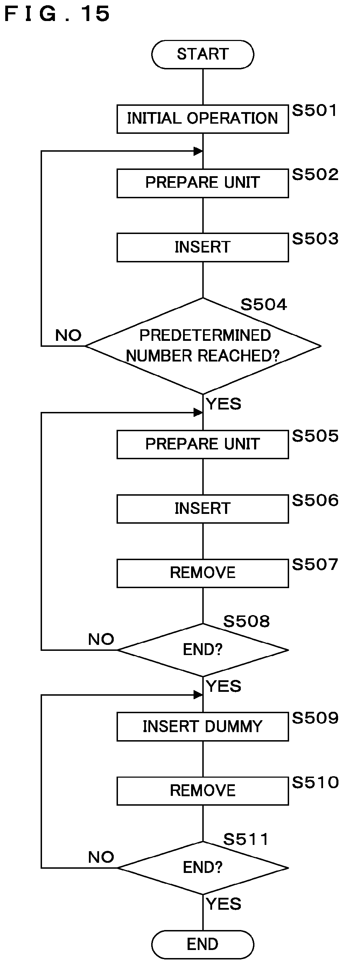

FIG. 15 is a flowchart for explaining the process flow of the program. In relation to FIG. 15, an overview of the process from start-up to the end of operation of the magnesium hydride production apparatus 10 will be explained. Description of control of individual parts, the coolers 54, the gastight doors 55, the valves 56, the pumps 57, the heaters 58, the conveying device 59, etc., will be omitted.

The control section 41 performs the initial operation to prepare the operation of the various parts of the magnesium hydride production apparatus 10 (step S501). The initial operation is, for example, heating and boosting pressure in the production furnace 20 until the temperature and pressure therein reach predetermined values.

The control section 41 performs preparation for inserting a unit 34 into the production furnace 20 (step S502). Specifically, the control section 41 causes a predetermined amount of magnesium compacts 16 to be received in the unit 34, and performs changing to a hydrogen atmosphere, heating, and pressure boosting sequentially. The unit 34U20 in FIG. 8 is the unit 34, for which step S502 has been completed.

The control section 41 inserts the unit 34, for which preparation has been completed, into the production furnace 20 (step S503). The control section 41 determines whether the number of the units 34 in the production furnace 20 has reached a predetermined number (step S504). The predetermined number is the number shown in the row of "Number of units in production furnace" in Table 1.

If it is determined that the predetermined number has not been reached (NO in step S504), the control section 41 returns to step S502. If it is determined that the predetermined number has been reached (YES in step S504), the control section 41 performs preparation for inserting a next unit 34 into the production furnace 20 (step S505).

The control section 41 inserts the unit 34, for which preparation has been completed, into the production furnace 20 (step S506). As explained using FIG. 10, the unit 34, for which processing has been completed, is pushed out into the cooling chamber 221.

The control section 41, as explained using FIGS. 11 and 12, removes the pushed-out unit 34 from the production furnace 20 (step S507). The control section 41 then performs cooling, decompression, and changing to the air atmosphere for the unit 34, and discharges the magnesium hydride-structure bodies 17 from the magnesium hydride production apparatus 10.

The control section 41 determines whether production of magnesium hydride is to be terminated (step S508). For example, when the predetermined maintenance time has arrived or when a planned number of units 34 have been inserted into the production furnace 20, the control section 41 determines to terminate the production of magnesium hydride.

If it is determined that production is not terminated (NO in step S508), the control section 41 returns to step S505. If it is determined to terminate the production (YES in step S508), the control section 41 inserts a dummy of the unit 34 into the production furnace 20 (step S509).

It is preferable that the dummy have a shape similar to that of the unit 34 and a specific heat substantially equal to that of the unit 34 and contain no substance that can contaminate the production furnace 20. For example, a unit 34, in which the magnesium hydride-structure bodies 17 produced in the past, magnesium pieces, or stainless-steel pieces instead of the magnesium compacts 16 are received in the magnesium receiving dishes, or an empty rack can be used as the dummy. A unit 34 with nothing received in the magnesium receiving dishes can also be used as the dummy

By inserting the dummy, the unit 34, for which processing has been completed, is pushed out into the cooling chamber 221. The control section 41 removes the pushed-out unit 34 from the production furnace 20 (step S510).

The control section 41 determines whether removal of the units 34 in the production furnace 20 has been completed (step S511). If it is determined that the removal has not been completed (NO in step S511), the control section 41 returns to step S509. If it is determined that the removal has been completed (YES in step S511), the control section 41 terminates the process.

If there is no need to remove the dummies of the unit 34 during maintenance, the next start-up of the magnesium hydride production apparatus 10 can be started in a state where the dummies of the unit 34 remain in the production furnace 20. In this case, steps S502 to S504 can be omitted.

With this embodiment, it is possible to provide the magnesium hydride production apparatus 10 suitable for mass production of magnesium hydride.

If the magnesium compacts 16 having a desired shape depending on the application are received in the magnesium receiving dish 31, it is possible to produce the magnesium hydride-structure bodies 17 having the desired shape.

Since the production furnace 20 is placed in an inclined state, it is possible to move the units 34 successively without installing a complex structure such as a conveyor belt in the production furnace 20.

An arrangement may be adopted such that the units 34 slide slowly toward the second gastight door 552 under their own weight. In this case, it is preferable that a stopper be provided in front of the second gastight door 552 to stop the units 34. When the unit 34, for which processing has been completed, is removed from the production furnace 20 in S507 and S510, the control section 41 first removes or retracts the stopper. The control section 41 returns the stopper to the original position after the unit 34 has been removed.

If the arrangement is adopted such that the units 34 slide under their own weight, the length of the production furnace 20 may be set so that there is a space for accommodating one unit 34 in a state shown in FIG. 8. When a unit 34 is inserted into the production furnace 20, the first actuator 591 needs only to push one unit 34 into the production furnace 20. Therefore, it is possible to reduce the size of the first actuator 591 and power consumption.

The number of the subunits 33 included in one unit 34 is arbitrary. For example, when a small number of subunits 33, such as one or two, are included in one unit 34, it is possible to reduce the size of the first and second chambers 21 and 22. For example, when a large number of subunits 33, such as ten or twenty, are included in one unit 34, the number of times the production furnace 20 is opened is small, so that it is possible to maintain stable reaction conditions.

While the magnesium compacts 16 in a tablet-like shape are illustrated in FIG. 1 by way of example, the shape of the magnesium compacts 16 is not limited to this. The magnesium compacts 16 may be of any shape, such as a rod-like shape or a plate-like shape.

If the pressure in the cooling chamber 221 is reduced sufficiently as a result of the cooling process in the cooling chamber 221, it is not necessary to provide the decompression chamber 222.

Magnesium powder may be used as a raw material for magnesium hydride instead of the magnesium compacts 16. When magnesium powder is used, the magnesium powder should be handled in an inert-gas atmosphere to prevent reactions with atmospheric oxygen.

### (Embodiment 2)

This embodiment relates to a magnesium hydride production apparatus 10 including two production furnaces 20. Description of the parts equivalent to those of Embodiment 1 will be omitted.

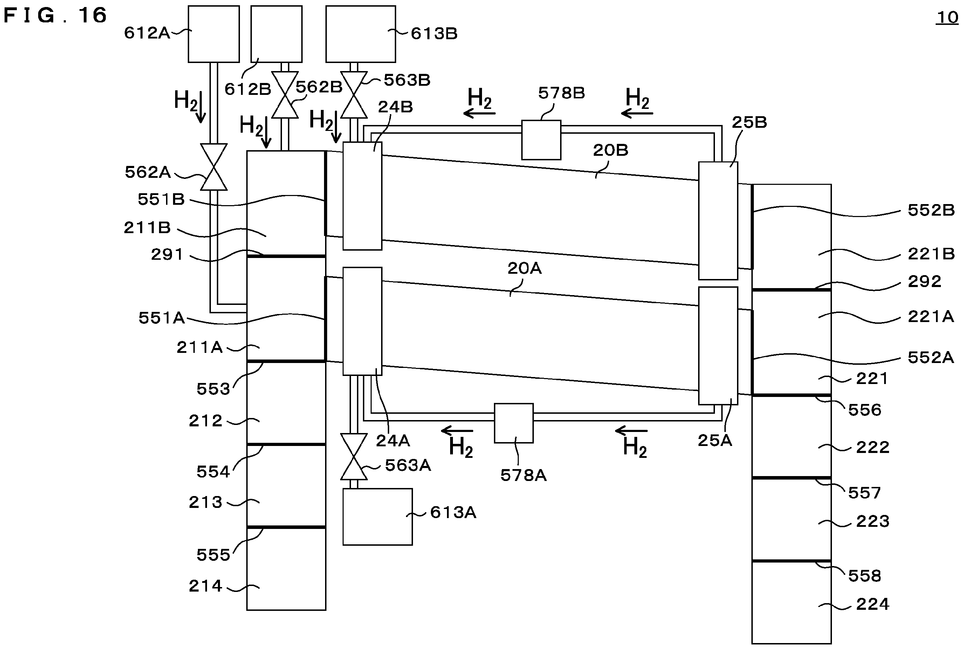

FIG. 16 is an explanatory diagram for explaining a configuration of the magnesium hydride production apparatus 10 of Embodiment 2. The production furnace 20A is placed in an inclined state so that the first end side is higher than the second end side. The production furnace 20B is placed parallel to the production furnace 20A. The first end side of the production furnace 20B is also higher than the second end side thereof.

The production furnace 20A and the production furnace 20B may be placed horizontally. Alternatively, an arrangement may be adopted such that one of the production furnaces 20A and 20B is placed horizontally, while the other is placed in an inclined state so that the first end side is higher than the second end side.

A pressure boosting chamber 211A is connected to the first end of the production furnace 20A with a first gastight door 551A interposed therebetween. A cooling chamber 221A is connected to the second end of the production furnace 20A with a second gastight door 552A interposed therebetween. A second hydrogen tank 612A is connected to the pressure boosting chamber 211A with a second valve 562A interposed therebetween.

A hydrogen supply cylinder 24A is attached to a periphery of the first end side of the production furnace 20A. A hydrogen discharge cylinder 25A is attached to a periphery of the second end side of the production furnace 20A. The hydrogen discharge cylinder 25A and the hydrogen supply cylinder 24A are connected to each other with a hydrogen pump 578A interposed therebetween. A third hydrogen tank 613A is connected to the hydrogen supply cylinder 24A with a third valve 563A interposed therebetween.

A pressure boosting chamber 211B is connected to the first end of the production furnace 20B with a first gastight door 551B interposed therebetween. A cooling chamber 221B is connected to the second end of the production furnace 20B with a second gastight door 552B interposed therebetween. A second hydrogen tank 612B is connected to the pressure boosting chamber 211B with a second valve 562B interposed therebetween.

A hydrogen supply cylinder 24B is attached to a periphery of the first end side of the production furnace 20B. A hydrogen discharge cylinder 25B is attached to a periphery of the second end side of the production furnace 20B. The hydrogen discharge cylinder 25B and the hydrogen supply cylinder 24B are connected to each other with a hydrogen pump 578B interposed therebetween. A third hydrogen tank 613B is connected to the hydrogen supply cylinder 24B with a third valve 563B interposed therebetween.

In FIG. 16, a heater 58 and a cooler 54 mounted on each of the production furnace 20A and the production furnace 20B, and a cooler 54 mounted on each of the cooling chamber 221A and the cooling chamber 221B are omitted.

An eleventh gastight door 291 is provided between the pressure boosting chamber 211A and the pressure boosting chamber 211B. A twelfth gastight door 292 is provided between the cooling chamber 221A and the cooling chamber 221B. A third gastight door 553 is provided between the pressure boosting chamber 211A and a heating chamber 212. A sixth gastight door 556 is provided between the cooling chamber 221A and a decompression chamber 222.

In FIG. 16, a heater 58 mounted on the heating chamber 212; a first valve 561, a first hydrogen tank 611, an argon valve 564, an argon gas tank 621, and a first suction pump 571 connected to a first replacement chamber; a third suction pump 573 connected to the decompression chamber 222; and an air pump 577 and a second suction pump 572 connected to a second replacement chamber 223 are omitted.

While one of the first gastight door 551A, the third gastight door 553, and the eleventh gastight door 291 provided for the pressure boosting chamber 211A is open, the other two doors are closed. While one of the first gastight door 551B and the eleventh gastight door 291 provided for the pressure boosting chamber 211B is open, the other is closed, that is, these doors are not opened at the same time.

While one of the second gastight door 552A, the sixth gastight door 556, and the twelfth gastight door 292 provided for the cooling chamber 221A is open, the other two doors are closed. While one of the second gastight door 552B and the twelfth gastight door 292 provided for the cooling chamber 221B is open, the other is closed, that is, these doors are not opened at the same time.

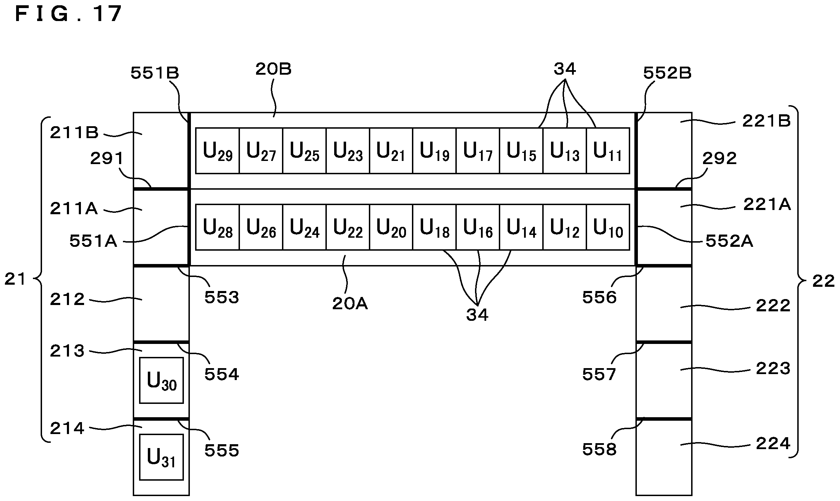

FIGS. 17 to 24 are explanatory diagrams for explaining operation of a conveying device 59 of Embodiment 2. In FIGS. 17 to 24, the production furnace 20A, the production furnace 20B, the first chamber 21, the second chamber 22, the gastight doors 55, and the units 34 are illustrated schematically, and the hydrogen tanks 61, the pumps 57, piping etc. are omitted. Explanation of operation of the gastight doors 55 similar to that of Embodiment 1 will also be omitted.

In FIG. 17, each of the production furnace 20A and the production furnace 20B has approximate dimensions substantially equal to those of No. 2 in Table 1 and has an annual magnesium hydride production capacity of 11,200 tons. Therefore, the magnesium hydride production apparatus 10 of this embodiment has an annual production capacity of 22,400 tons.

FIG. 17 shows a state, in which the reaction shown in Equation (1) is occurring in the production furnace 20A and the production furnace 20B. The interior of the cooling chamber 221A and the interior of the cooling chamber 221B are maintained at a temperature and pressure close to those of the interior of the production furnaces 20.

The control section 41 transfers the unit 34U30 from the receiving chamber 214 to the first replacement chamber 213 at a predetermined period of time before processing of the unit 34U10 is completed in the production furnace 20A. The first replacement chamber 213 is vented to the air atmosphere. The control section 41 changes the atmosphere in the first replacement chamber 213 to an argon atmosphere and then to a hydrogen atmosphere.

The control section 41 transfers the unit 34U30 from the first replacement chamber 213 to the heating chamber 212. The control section 41 operates the heater 58 to heat the interior of the heating chamber 212 to a temperature close to that of the interior of the production furnaces 20.

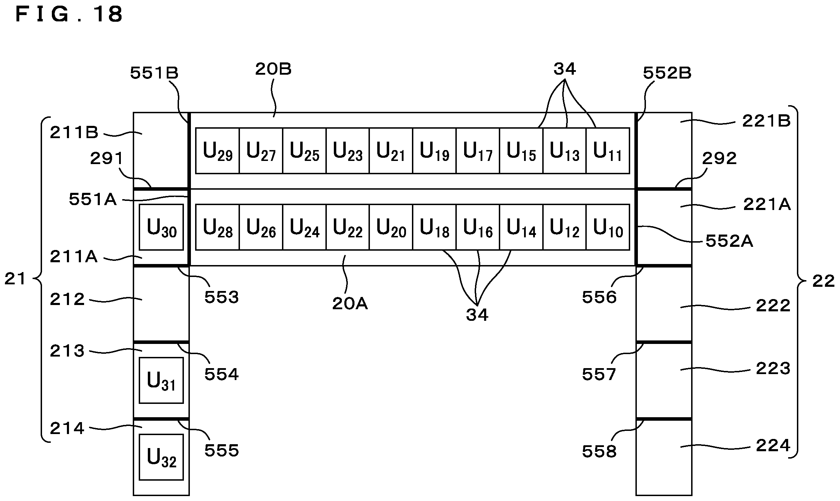

After the heating is completed, the control section 41 opens the third gastight door 553 and operates the conveying device 59 to transfer the unit 34U30 to the pressure boosting chamber 211A, as shown in FIG. 18. The control section 41 closes the third gastight door 553. The first gastight door 551A and the eleventh gastight door 291 are also closed.

The control section 41 operates the second valve 562A to feed hydrogen from the second hydrogen tank 612A into the pressure boosting chamber 211A so that the pressure in the pressure boosting chamber 211A is increased to a pressure close to that of the interior of the production furnace 20A. In this way, the interior of the pressure boosting chamber 211A is set to a temperature and pressure close to those of the interior of the production furnace 20.

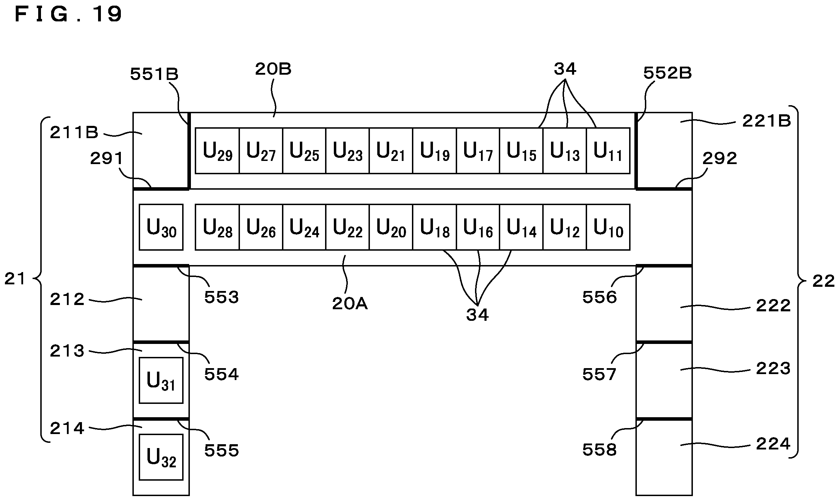

As shown in FIG. 19, the control section 41 opens the first gastight door 551A and the second gastight door 552A to bring the production furnace 20A, the pressure boosting chamber 211A, and the cooling chamber 221A to one continuous space.

The control section 41 pushes the unit 34U30 into the production furnace 20A. The control section 41 closes the first gastight door 551A. The control section 41 pulls the unit 34U10 into the cooling chamber 221A. The control section 41 closes the second gastight door 552A.

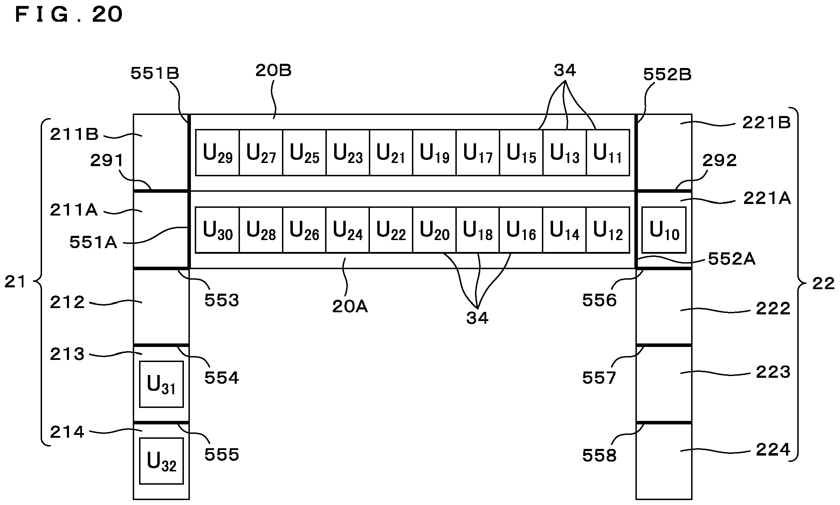

In this way, as shown in FIG. 20, the unit 34U10, which has been processed for a predetermined period of time, is removed from the production furnace 20A. The unit 34U10 is then removed from the magnesium hydride production apparatus 10 via the decompression chamber 222, the second replacement chamber 223, and the delivery chamber 224.

The control section 41 transfers the unit 34U31 in the receiving chamber 214 into the first replacement chamber 213 at a predetermined period of time before processing of the unit 34U11 is completed in the production furnace 20B. The first replacement chamber 213 is vented to the air atmosphere. The control section 41 changes the atmosphere in the first replacement chamber 213 to an argon atmosphere and then to a hydrogen atmosphere.

After the changing to the hydrogen atmosphere is completed, the control section 41 transfers the unit 34U31 from the first replacement chamber 213 to the heating chamber 212. The control section 41 operates the heater 58 to heat the interior of the heating chamber 212 to a temperature close to that of the interior of the production furnace 20B.

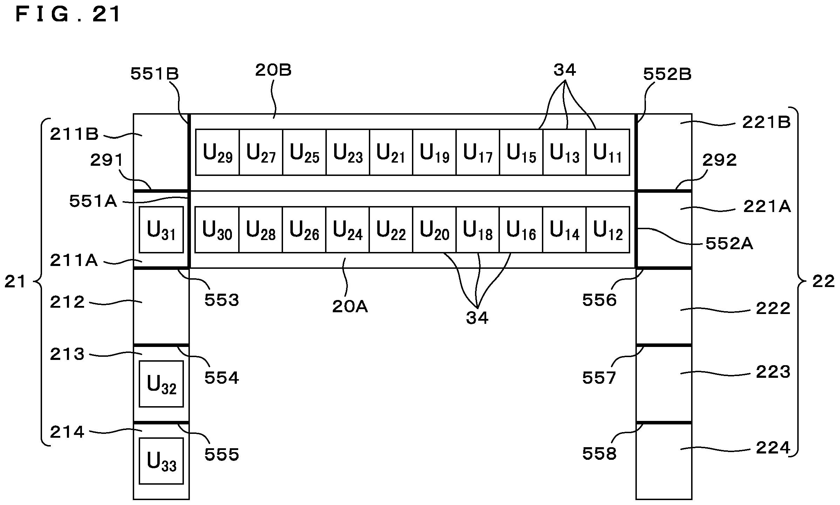

After the heating is completed, the control section 41 opens the third gastight door 553 and operates the conveying device 59 to transfer the unit 34U31 to the pressure boosting chamber 211A, as shown in FIG. 21. The control section 41 closes the third gastight door 553. The first gastight door 551A and the eleventh gastight door 291 are also closed.

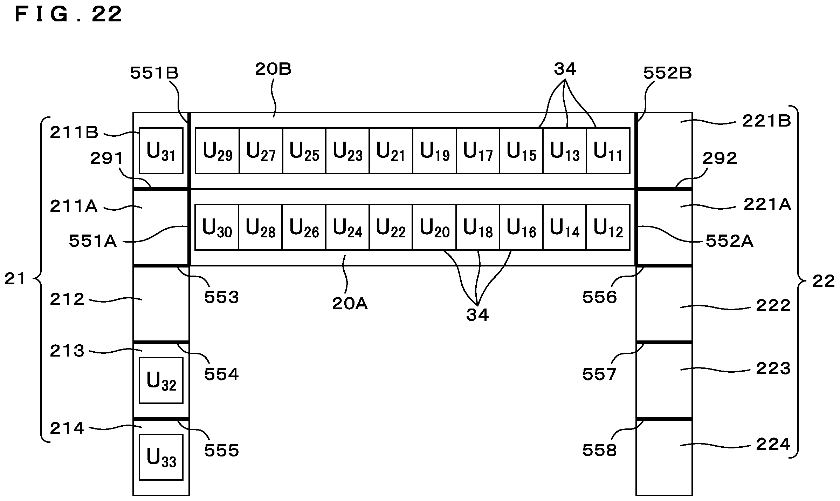

The control section 41 opens the eleventh gastight door 291 and operates the conveying device 59 to transfer the unit 34U31 to the pressure boosting chamber 211B, as shown in FIG. 22. The control section 41 closes the eleventh gastight door 291. The first gastight door 551B is also closed.

The control section 41 operates the second valve 562B to feed hydrogen from the second hydrogen tank 612B into the pressure boosting chamber 211B so that the pressure in the pressure boosting chamber 211B is increased to a pressure close to that of the interior of the production furnace 20B. In this way, the interior of the pressure boosting chamber 211B is set to a temperature and pressure close to those of the interior of the production furnace 20B.

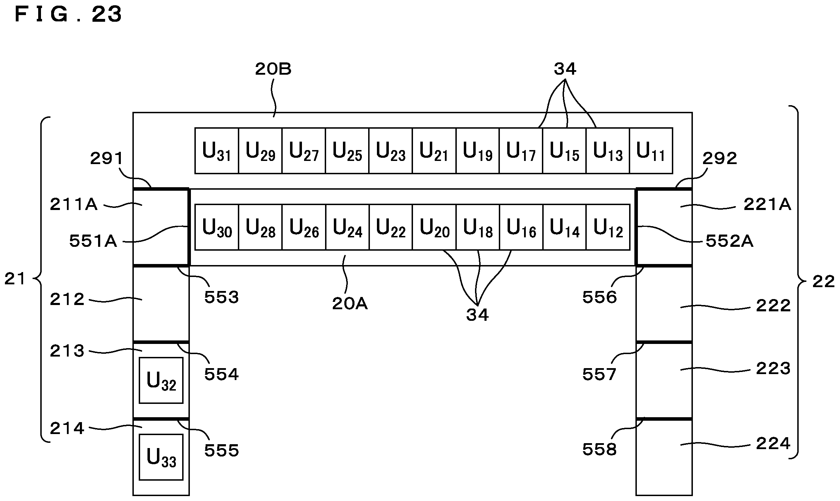

As shown in FIG. 23, the control section 41 opens the first gastight door 551B and the second gastight door 552B to bring the production furnace 20B, the pressure boosting chamber 211B, and the cooling chamber 221B to one continuous space. The control section 41 pushes the unit 34U31 into the production furnace 20B. The control section 41 closes the first gastight door 551B. The control section 41 pulls the unit 34U11 into the cooling chamber 221B. The control section 41 closes the second gastight door 552B.

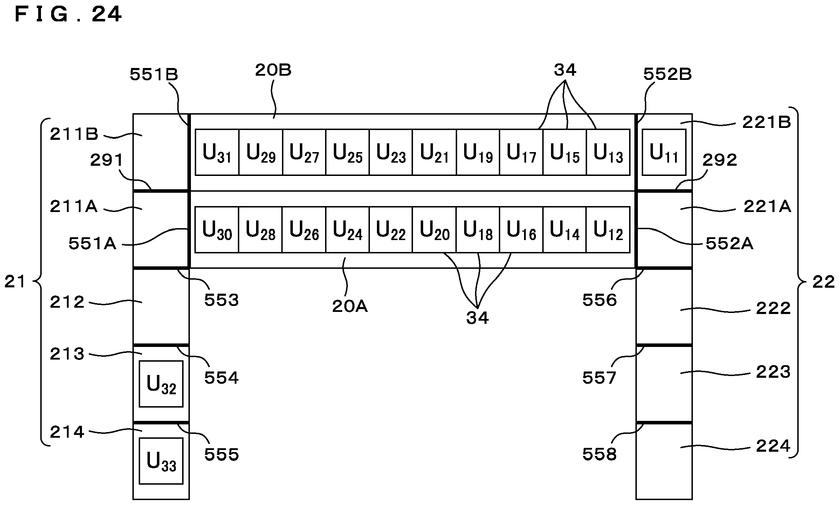

In this way, as shown in FIG. 24, the unit 34U11, which has been processed for a predetermined period of time, is removed from the production furnace 20B. The unit 34U11 is then removed from the magnesium hydride production apparatus 10 via the cooling chamber 221A, the decompression chamber 222, the second replacement chamber 223, and the delivery chamber 224.

The insertion of a unit 34 into the production furnace 20A and the insertion of a unit 34 into the production furnace 20B are alternately performed at 2.4-hour intervals. In other words, the control section 41 operates the receiving chamber 214, the first replacement chamber 213, the heating chamber 212, the decompression chamber 222, the second replacement chamber 223, and the delivery chamber 224 every 2.4 hours. In this way, magnesium hydride can be delivered every 2.4 hours.

Note that three or more production furnaces 20 may be provided in parallel if there is a margin in the processing capacity of the receiving chamber 214, the first replacement chamber 213, the heating chamber 212, the decompression chamber 222, the second replacement chamber 223, and the delivery chamber 224.

The production furnaces 20 may be arrayed vertically in parallel with each other or horizontally in parallel with each other.

Each of the production furnace 20A and the production furnace 20B may have approximate dimensions substantially equal to those of No. 1 in Table 1. Since each production furnace 20 has an annual magnesium hydride production capacity of 4,600 tons, it is possible to obtain the magnesium hydride production apparatus 10 with an annual production capacity of 9,200 tons.

The technical features (components) described in each example can be combined with each other and, when combined, new technical features are formed.

The embodiments disclosed herein are in all respects illustrative and should be considered non-limiting. The scope of the present invention is indicated by the claims, not in the sense given above, and is intended to include all modifications within the meaning and scope equivalent to the claims.

### Description of Reference Numerals

10 magnesium hydride production apparatus
16 magnesium compact
17 magnesium hydride-structure body
20 production furnace
201 feeding opening
202 discharge opening
21 first chamber
211 pressure boosting chamber
212 heating chamber
213 first replacement chamber
214 receiving chamber
22 second chamber
221 cooling chamber
222 decompression chamber
223 second replacement chamber
224 delivery chamber
24 hydrogen supply cylinder
25 hydrogen discharge cylinder
291 eleventh gastight door
292 twelfth gastight door
31 magnesium receiving dish
33 subunit
34 unit
40 controller
41 control section
42 main memory
43 auxiliary memory
44 input section
45 output section
46 communication section
47 input I/F
48 output I/F
51 pressure gauge
52 thermometer
53 flowmeter
54 cooler
55 gastight door
551 first gastight door
552 second gastight door
553 third gastight door
554 fourth gastight door
555 fifth gastight door
556 sixth gastight door
557 seventh gastight door
558 eighth gastight door
56 valve
561 first valve
562 second valve
563 third valve
564 argon valve
57 pump
571 first suction pump
572 second suction pump
573 third suction pump
577 air pump
578 hydrogen pump
58 heater
59 conveying device
591 first actuator
592 second actuator
595 movement path
61 hydrogen tank
611 first hydrogen tank
612 second hydrogen tank
613 third hydrogen tank
621 argon gas tank

## Claims

1. A magnesium hydride production apparatus comprising:
a tubular production furnace, in which magnesium hydride is produced by causing magnesium and hydrogen to react with each other;
a first chamber connected to a first end of the production furnace, in which chamber the magnesium to be charged into the production furnace is heated; and
a second chamber connected to a second end of the production furnace, in which chamber the magnesium hydride produced in the production furnace is cooled.

2. The magnesium hydride production apparatus according to claim 1, further comprising:
a first gastight door provided between the first chamber and the production furnace; and
a second gastight door provided between the second chamber and the production furnace.

3. The magnesium hydride production apparatus according to claim 2, wherein
the first chamber includes, in the following order:
a first replacement chamber, in which a hydrogen atmosphere is created around a unit having received the magnesium;
a heating chamber, in which the unit is heated so as to become equal to a temperature in the production furnace; and
a pressure boosting chamber, in which pressure of the hydrogen around the unit is boosted so as to become equal to a pressure in the production furnace, wherein
the first gastight door is provided for the pressure boosting chamber.

4. The magnesium hydride production apparatus according to claim 3, wherein
the first chamber includes a receiving chamber, in which the magnesium is received in the unit.

5. The magnesium hydride production apparatus according to claim 3 or 4, further comprising
a conveying device that conveys the unit from the first chamber to the second chamber via the production furnace.

6. The magnesium hydride production apparatus according to claim 5, wherein
the conveying device includes:
a first actuator that moves the unit from the first chamber toward the production furnace;
a second actuator that moves the unit from the production furnace toward the second chamber;
a first opening-and-closing section that opens the first gastight door before the first actuator operates and that closes the first gastight door after the first actuator operates; and
a second opening-and-closing section that opens the second gastight door before the first actuator operates and that closes the second gastight door after the second actuator operates.

7. The magnesium hydride production apparatus according to claim 5 or 6, wherein
the production furnace is placed so that the first end is higher in position than the second end, and
the conveying device includes a movement path, on which the unit slides.

8. The magnesium hydride production apparatus according to any one of claims 3 to 7, wherein
the second chamber includes, in the following order:
a decompression chamber, in which pressure of the hydrogen around the unit is reduced so as to become equal to an atmospheric pressure; and
a second replacement chamber, in which the hydrogen around the unit is replaced with air or inert gas, wherein
the second gastight door is provided at an entrance to the second chamber.

9. The magnesium hydride production apparatus according to any one of claims 3 to 8, wherein
the unit includes a plurality of magnesium receiving dishes, in which the magnesium is received,
the magnesium receiving dishes are stacked with spaces therebetween, and
the production furnace has, in a side wall thereof, a feeding opening for feeding hydrogen toward the spaces.

10. The magnesium hydride production apparatus according to claim 9, wherein
the production furnace has, in the side wall thereof, a discharge opening for discharging hydrogen at a position closer to the second end than the feeding opening.

11. The magnesium hydride production apparatus according to claim 10, further comprising
a pump that causes the hydrogen to flow from the discharge opening to the feeding opening.

12. The magnesium hydride production apparatus according to any one of claims 1 to 11, wherein
a plurality of the production furnaces are placed parallel to each other; and
each of the first chamber and the second chamber is connected to the plurality of production furnaces.

13. The magnesium hydride production apparatus according to any one of claims 1 to 12, wherein
the magnesium is a compact made by compressing flakes of magnesium.

14. A magnesium hydride production method comprising:
charging magnesium into a first chamber connected to a first end of a tubular production furnace;
heating the charged magnesium in the first chamber;
producing magnesium hydride while conveying the heated magnesium from the first end to a second end of the production furnace; and
cooling the produced magnesium hydride in a second chamber connected to the second end of the production furnace.
